# DEMANDE DE BREVET EUROPEEN

(11) **EP 0 943 909 A1**
(43) Date de publication de la demande: **22.09.1999**
(21) Numéro de dépôt: 99400615.3
(22) Date de dépôt: 12.03.1999
(51) Int. Cl.: G01M 15/00, F02D 41/26

(54) **Système de génération de commandes d'actionneurs**

(30) Priorité: 17.03.1998 FR 9803259
(71) Demandeur: RENAULT, 92109 Boulogne-Billancourt (FR)
(72) Inventeur: Rocher, Jean-Michel, 91620 Nozay (FR)
(74) Mandataire: Fernandez, Francis Lionel

(57) **Abrégé**

L'invention concerne un système de génération de commande d'actionneurs d'un groupe motopropulseur pour véhicule, en phase avec les cycles du moteur, en particulier de type tout ou rien, comprenant:
- des moyens (5) de synchronisation des commandes des actionneurs (4) par mesure des informations de synchronisation sur un cycle de fonctionnement délivrées par le groupe motopropulseur (2) et identification des phases de fonctionnement ;
- plusieurs générateurs (8) paramétrés de commandes, destinés chacun à un actionneur (4)
- une base de temps (7) générant une horloge de référence, pour les moyens de synchronisation et les générateurs de commandes
- un dispositif d'interface (10) entre des moyens de paramétrage et de contrôle-commande et, d'une part les moyens de synchronisation et, d'autre part au moins un générateur de commandes ;
- un dispositif (9) d'interface entre chaque générateur de commandes et l'actionneur qu'il commande.

## Description

L'invention concerne un système de génération de signaux pour la commande d'actionneurs d'un groupe motopropulseur, pour véhicule automobile, ces signaux étant préférentiellement de type tout ou rien, ou de type analogiques.

Le problème technique posé par la mise au point des stratégies de contrôle et de commande d'un groupe motopropulseur, donc des actionneurs ou organes associés au moteur, nécessite de commander ces différents actionneurs par des signaux de type tout ou rien, en contrôlant le phasage de cette commande par rapport aux cycles de fonctionnement du moteur définis entre deux points morts hauts. Ces actionneurs sont par exemple les injecteurs d'essence, le calculateur d'allumage, la vanne de recirculation des gaz d'échappement, l'électrovanne de séquencement de la boîte de vitesses automatique.

Actuellement, une solution est apportée par le système P.I.M. de PEUGEOT S.A., réalisé à partir de plusieurs micro-contrôleurs, associés chacun à un actionneur, et nécessitant la gestion de logiciels qui rendent toute modification délicate.

Une autre solution connue, développée par NIPPON DENSO, est constituée par un calculateur électronique, dédié à une seule application comme le calculateur de contrôle moteur du véhicule, qui est alors modifié pour être émulable et auquel sont associés un contrôleur et une console. Son principal inconvénient tient au fait qu'il n'est pas aisément modifiable en vue d'une autre application, c'est-à-dire de la commande d'un autre actionneur du groupe motopropulseur.

Pour résoudre ces problèmes, notamment le nombre insuffisant de commandes d'actionneurs par cycle de fonctionnement du groupe motopropulseur et l'adaptabilité à l'environnement, l'invention propose un système de génération en temps réel de signaux de type tout ou rien, pour le contrôle, la commande, la mise au point et le test du groupe motopropulseur d'un véhicule automobile et de ses actionneurs, paramétrable pour chaque actionneur en nombre de commandes, en phase, en position et en durée des commandes.

Pour cela, l'objet de l'invention est un système de génération de signaux de commande d'actionneurs d'un groupe motopropulseur pour véhicule automobile, en phase avec les cycles de fonctionnement du moteur, caractérisé en ce qu'il comprend :
- des moyens de synchronisation des signaux de commande des différents actionneurs par mesure des informations de synchronisation sur un cycle de fonctionnement délivrées par le groupe motopropulseur et identification des phases de fonctionnement ;
- plusieurs dispositifs générateurs paramétrés de signaux de commande, destinés chacun à un actionneur;
- une base de temps générant une horloge de référence, pour les moyens de synchronisation et les dispositifs générateurs de commandes des actionneurs ;
- un dispositif d'interface de contrôle entre des moyens de paramétrage et de contrôle-commande et, d'une part les moyens de synchronisation et, d'autre part au moins un dispositif générateur de commandes ;
- un dispositif d'interface entre chaque générateur de commandes et l'actionneur qu'il commande.

Le principal avantage du système selon l'invention est qu'il est aisément extensible en nombre de voies de commande d'actionneur par simple ajout d'un bloc de commande.

D'autres caractéristiques et avantages de l'invention apparaîtront à la lecture de la description suivante, illustrée par les figures suivantes qui sont :
- la figure 1 : un schéma de l'architecture d'un groupe motopropulseur associé à un système de génération de commandes d'actionneurs selon l'invention ;
- la figure 2 : un schéma électronique d'un système de génération de commandes d'actionneurs selon l'invention.

Les éléments portant les mêmes références sur les différentes figures remplissent les mêmes fonctions en vue des mêmes résultats.

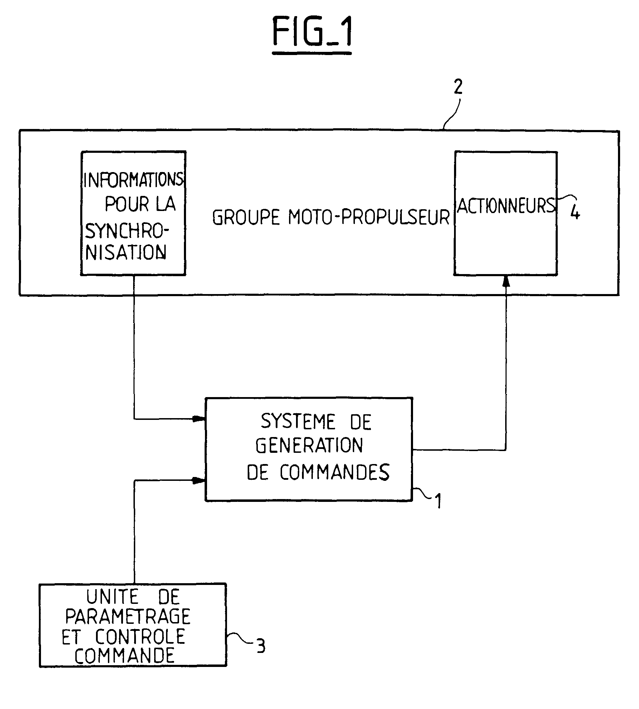

Comme cela apparaît sur l'architecture de la figure 1, le système 1 de génération de signaux de commande, de type tout ou rien par exemple, reçoit d'une part du groupe motopropulseur 2, les informations nécessaires à sa synchronisation et, d'autre part d'une unité 3 de paramétrage et de contrôle-commande, des motifs de commande destinés à piloter les actionneurs 4 en phase avec les cycles de fonctionnement du moteur.
Ces actionneurs sont par exemple le calculateur d'allumage, les injecteurs pour les moteurs à essence ou Diesel, la vanne d'air additionnel du boîtier papillon, commandés par des signaux de type tout ou rien, ou des unités de calcul électronique commandées par des signaux analogiques, ou tout autre organe dont le fonctionnement est lié à la rotation du moteur.

Ces moyens 3 de paramétrage et de contrôle-commande peuvent être soit un microprocesseur associé à une mémoire, soit une unité centrale de traitement de signal associée à une mémoire et à des circuits d'interface de bus ou de lignes, servant au contrôle du fonctionnement du système et à l'envoi des ordres pour le réglage des signaux de commande.

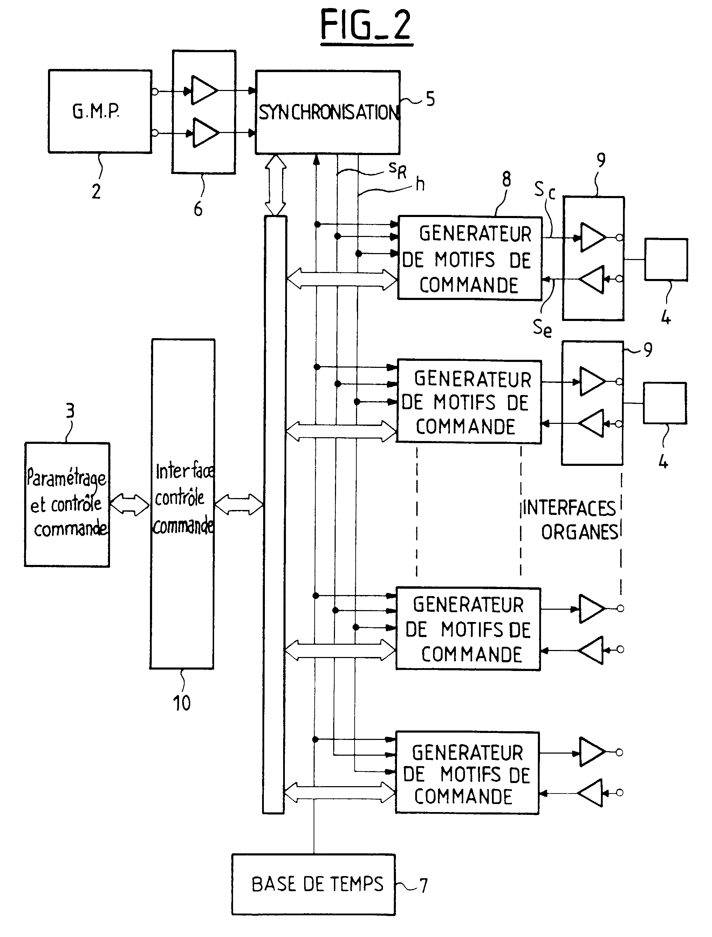

Comme cela apparaît sur le schéma de la figure 2, le système de génération de signaux de commande selon l'invention comprend des moyens 5 de synchronisation des différents signaux de commande qu'il va délivrer à plusieurs actionneurs du groupe motopropulseur. Ces moyens de synchronisation reçoivent des informations de synchronisation en provenance du groupe motopropulseur par l'intermédiaire d'un dispositif d'interface 6, les rendant plus robustes électriquement. Ces informations de synchronisation proviennent par exemple du signal dent de la couronne d'allumage ou de l'arbre à cames qui permet de phaser les différentes explosions du moteur dans le cycle de fonctionnement.

Les moyens 5 de synchronisation mesurent ces informations de synchronisation en utilisant une horloge de référence générée par une base de temps 7 à partir d'un oscillateur stabilisé, et identifient les phases de fonctionnement du groupe motopropulseur. Puis, ils génèrent les horloges de phase h et les signaux de référence s_{R} pour la gestion du système, à plusieurs dispositifs 8 générateurs de signaux de commande associé à un actionneur 4. Les signaux de référence s_{R} permettent de connaître les origines temporelles des phases et les horloges de phase h permettent de vérifier la cohérence entre la position des fronts des commandes et la durée de celles-ci. De plus, les informations mesurées sont envoyées aux moyens 3 de contrôle et de paramétrage qui les mémorise pour réaliser les tâches de calcul des algorithmes de contrôle.

Ainsi, le système de génération selon l'invention comprend plusieurs dispositifs 8 générateurs de signaux de commande, qui reçoivent l'horloge de référence de la base de temps 7, les signaux de référence s_{R} et les horloges de phase h délivrés par les moyens de synchronisation 5, le paramétrage des motifs des signaux de commande par l'intermédiaire du dispositif d'interface 10 avec les moyens 3 de contrôle-commande. Ces dispositifs générateurs sont destinés chacun à générer un signal de commande S_{c} à l'actionneur associé, par l'intermédiaire d'un dispositif d'interface 9 bidirectionnel, permettant également de renvoyer vers les moyens 3 de paramétrage via le dispositif générateur 8, un signal Sₑ rendant compte de l'état de l'actionneur et/ou de son circuit de pilotage, ainsi que sur le recouvrement éventuel entre les commandes dans les motifs des signaux tout ou rien, donc sur la cohérence des motifs en général.

Les moyens de synchronisation 5, la base de temps 7, les dispositifs 8 générateurs de signaux de commande, les dispositifs d'interface 9 et 10 prévus entre les dispositifs 8 générateurs de commande et, d'une part les actionneurs 4 et, d'autre part les moyens 3 de paramétrage, peuvent être réalisés par des circuits logiques programmables ou par des circuits intégrés spécifiques à une application, autrement appelés A.S.I.C. (Application Specific Integrated Circuit).

Concernant la synchronisation et le phasage des signaux de commande des actionneurs avec les cycles de fonctionnement du groupe motopropulseur, elle est assurée par le système selon l'invention avec une gigue temporelle minimale. Le paramétrage des signaux de commande est réalisé aisément par l'utilisateur, grâce aux moyens 3, tant en position qu'en durée et/ou niveau et/ou message. Ainsi chaque motif constituant la commande est positionné en phase par rapport au fonctionnement du moteur ou bien en temps. De même, la validation individuelle des commandes est réalisée pour chaque motif.

Le système selon l'invention assure également une fonction de contrôle par la mesure des informations de synchronisation du groupe motopropulseur sur un cycle moteur, soit par exemple de la durée d'un tour du moteur et/ou de chaque dent du volant, ainsi que de l'origine des phases par rapport à l'instant de démarrage. Il permet aussi la mesure du régime du moteur.

Il permet d'autre part d'envoyer aux moyens 3 de paramétrage et de contrôle-commande un compte-rendu de l'état des organes et/ou de leurs circuits de pilotage, en particulier pour le déclenchement de certaines stratégies de commande.

L'invention présente comme avantages importants la possibilité de faire fonctionner un nombre illimité de voies de commande d'actuateurs, puisque l'on peut ajouter simplement de nouveaux dispositifs générateurs de signaux, dont le paramétrage est assuré de façon indépendante. Elle s'adapte de plus à tout type de groupe motopropulseur et d'environnements de contrôle. Elle permet la génération de séquences constituées d'un nombre variable de commandes par cycle de fonctionnement du groupe motopropulseur et pour chaque actionneur. L'ensemble fonctionne en temps réel rapide, avec une grande précision dans les mesures et le phasage des signaux générés grâce à la gigue minimale. Enfin, elle fournit une information sur l'état du groupe motopropulseur dans lequel elle est intégrée.

## Revendications

1. Système de génération de signaux de commande pour actionneurs d'un groupe motopropulseur, dans un véhicule automobile, en phase avec les cycles de fonctionnement du moteur, caractérisé en ce qu'il comprend :
- des moyens (5) de synchronisation des signaux de commande des différents actionneurs (4) par mesure des informations de synchronisation sur un cycle de fonctionnement délivrées par le groupe motopropulseur (2) et identification des phases de fonctionnement ;
- plusieurs dispositifs générateurs (8) paramétrés de signaux de commande, destinés chacun à un actionneur (4) ;
- une base de temps (7) générant une horloge de référence, pour les moyens de synchronisation et les dispositifs générateurs de commandes des actionneurs ;
- un dispositif d'interface de contrôle (10) entre des moyens (3) de paramétrage et de contrôle-commande et, d'une part les moyens (5) de synchronisation et, d'autre part au moins un dispositif générateur de commandes (8) ;
- un dispositif (9) d'interface entre chaque dispositif générateur (8) de commandes et l'actionneur (4) qu'il commande.

2. Système de génération selon la revendication 1, caractérisé en ce que les moyens (5) de synchronisation reçoivent d'une part des informations de synchronisation en provenance du groupe motopropulseur (2) par l'intermédiaire d'un dispositif d'interface (6), et d'autre part l'horloge de référence de la base de temps (7), pour délivrer les horloges de phase (h) et les signaux de référence (s_{R}) pour la gestion du système à chaque dispositif (8) générateur de signaux de commande.

3. Système de génération selon les revendications 1 et 2, caractérisé en ce que chaque dispositif (8) générateur de signaux de commande reçoit :
- l'horloge de référence provenant de la base de temps (7) ;
- le paramétrage des motifs des signaux de commande pour l'actionneur (4) piloté, provenant du dispositif (10) d'interface de contrôle ;
- l'état de l'actionneur (4) et/ou de son circuit de pilotage associé, provenant du dispositif (9) d'interface entre le dispositif générateur (8) et l'actionneur (4),
pour délivrer d'une part un signal de commande (S_{c}) à l'actionneur (4) et d'autre part un signal (Sₑ) représentatif de l'état de l'actionneur et/ou de son circuit de pilotage, ainsi que de la cohérence des motifs du signal de commande, vers les moyens (3) de paramétrage via le dispositif générateur (8).

4. Système de génération selon les revendications 2 et 3, caractérisé en ce que les moyens (5) de synchronisation et les dispositifs (8) générateurs de signaux de commande sont constitués de circuits logiques programmables ou de circuits intégrés spécifiques à une application de type A.S.I.C.

5. Système de génération selon la revendication 1, caractérisé en ce que la base de temps (7) génère une horloge de référence à partir d'un oscillateur stabilisé et est constituée de circuits logiques programmables ou de circuits intégrés spécifiques à une application de type A.S.I.C.

6. Système de génération selon la revendication 1, caractérisé en ce que le dispositif (9) d'interface entre un dispositif (8) générateur de signaux de commande et l'actionneur associé (4) qu'il commande est constitué de circuits d'interface de lignes et/ou de circuits d'interface de puissance.

7. Système de génération selon la revendication 1, caractérisé en ce que les moyens (3) de paramétrage et de contrôle-commande sont réalisés par un microprocesseur associé à une mémoire et en ce que l'interface (10) de contrôle est constitué de circuits logiques programmables ou de circuits intégrés spécifiques à une application de type A.S.I.C..

8. Système de génération selon la revendication 1, caractérisé en ce que les moyens (3) de paramétrage et de contrôle-commande sont réalisés par une unité centrale associée à une mémoire et à des circuits d'interface de bus ou de lignes, et en ce que l'interface (10) de contrôle est constitué de circuits logiques programmables ou de circuits intégrés spécifiques à une application de type A.S.I.C..
